# EUROPÄISCHE PATENTSCHRIFT

(11) **EP 1 103 185 B1**
(45) Veröffentlichungstag und Bekanntmachung des Hinweises auf die Patenterteilung: **16.03.2005**
(21) Anmeldenummer: 00124312.0
(22) Anmeldetag: 16.11.2000
(51) Int. Cl.: A22C 13/00

(54) **Verfahren zur Herstellung füllmaschinengängiger Kupplungen für künstliche Wursthüllen**
Process for the manufacture of couplings for synthetic sausage casings adapted for filling machines
Procédé de préparation de couplages pour enveloppes synthétiques de saucisses adaptés aux machines de remplissage

(30) Priorität: 29.11.1999 DE 19957455
(43) Veröffentlichungstag der Anmeldung: 30.05.2001
(73) Patentinhaber: Wolff Walsrode AG, 29665 Walsrode (DE)
(72) Erfinder: Schwarz, Erwin, 27374 Visselhövede (DE); Krallmann, Anton, 29683 Fallingbostel (DE)
(74) Vertreter: Lütjens, Henning

(56) Entgegenhaltungen:
- EP-A- 0 014 353
- EP-A- 0 014 354
- EP-A- 0 824 867
- DE-A- 3 907 951

## Beschreibung

Die vorliegende Erfindung betrifft eine füllmaschinengängige Kupplung für künstliche Wursthüllen aus gegebenenfalls innen oder außen lackierten Cellulosefaserschlauchfolien oder aus ein- oder mehrschichtigen biaxial gereckten schrumpffähigen Schlauchfolien aus Polyamid zur Umhüllung von in flüssigen oder pastösen Zustand abgepackten Füllgütern, bevorzugt für Wurstbrät, verwendet werden, wie aus dem Dokument EP-A-0 014 354 bekannt.

Die Entwicklung im Bereich künstlicher Wursthüllen ist gekennzeichnet durch das Bestreben Produkte bereitzustellen, die den veränderten Anforderungen der fleischverarbeitenden Industrie im Hinblick auf Ökonomie und Ökologie gerecht werden.

Als Wursthüllen werden oft Cellulosefaserdärme, Polyamid- oder Polyvinylidenchlorid (PVDC)-Därme eingesetzt.

Cellulosefaserdarm wird hergestellt, indem Fließ aus nativer Cellulose zum Schlauch geformt wird. Dieser Schlauch wird mit Viskose (chemisch gelöste Cellulose) beschichtet. Nach dem Beschichtungsvorgang wird die Viskoseschicht durch eine chemische Reaktion in regenerierte Cellulose umgewandelt. Damit besitzt der Cellulosefaserdarm mehrere Schichten. Zusätzlich kann der Faserdarm durch Innen- oder Außenlackierung mit einer Barriereschicht; hergestellt aus PVDC-Mischpolymerisat; versehen werden.

In der DE-A-4 339 337 wird eine fünfschichtige, biaxial verstreckte Schlauchfolie zur Verpackung und Umhüllung von Lebensmitteln beschrieben. Diese Hülle ist dadurch gekennzeichnet, dass sie aus einer inneren und äußeren Schicht aus dem gleichen Polyamidmaterial und einer mittleren Polyolefinschicht sowie zwei aus dem gleichen Material bestehenden Haftvermittlerschichten aufgebaut ist.

In der EP-A-530 538 wird eine fünfschichtig coextrudierte biaxial gereckte Schlauchfolie mit mindestens 3 Polyamidschichten beschrieben, wobei zwischen den innen und außenliegenden Polyamidschichten Polymerschichten mit wasser- und sauerstoffsperrenden Charakter eingebunden sind.

Die Wursthüllen werden wegen der besseren Kennzeichnung oder aber insbesondere aus Werbezecken, in der Regel im Flexodruckverfahren, aber auch mit anderen Druckverfahren wie Tiefdruck bedruckt. Da es sich bei diesem Druckverfahren um ein Endlosverfahren handelt, müssen die Wursthüllen durch eine Kupplung zusammengefügt werden. Die Kupplung soll so erfolgen, dass sie keinen Dickenunterschied (wichtig für den Druckprozess) im Bereich der Kupplung aufweist und dass sie sich nicht störend auf die nachfolgenden Prozesse z.B. Raffen (hier raffähige Kupplung) auswirkt.

Für die fleischverarbeitende Industrie ist es wichtig, die oben genannten Schlauchhüllen mit hoher Effizienz zu verarbeiten. Aus diesem Grund werden die Schlauchhüllen einem Raffprozess unterzogen, bei dem sie mit Hilfe von Rafflamellen in Falten auf einem Raffdorn zu einer Raffraupe gelegt werden, so dass seine Länge drastisch reduziert wird. Das Raffen eines schlauchförmigen Materials ist beispielsweise aus DE-A-8 944 623 bekannt. Da aber der Darm verarbeitungsbedingt nur in bestimmten Längen z.B 500 m oder 600 m oder 1000 m hergestellt werden kann und die Darmlänge für eine Raffraupe kein ganzzahliger Teiler z. B 33 m ist, müssen die Darmenden wieder zusammengeklebt werden. So kann eine Kupplungstelle innerhalb einer Raffraupe auftreten. Das Verbinden von Rollenenden ist daher von besonderer Bedeutung, weil somit der entstehende Abfall deutlich reduziert werden kann.

Eine außergewöhnliche hohe Bedeutung kommt den Darmkupplungen beim Füllprozess zu. Die Därme sind in dem Ausgangszustand z.B. als Raffraupe in der Regel nicht elastisch genug, um beim Füllen ein pralles und glattes Aussehen der Wurst zu erzeugen. Aus diesem Grund wird der cellulose- und auch der polyamidhaltige Schlauch kurz vor der Füllung mit Fleisch oder mit Wurst im kalten und auch warmen Wasser getaucht bzw. gewässert. Diese Vorgehensweise wird unter anderem in DE-A-3 426 723 beschrieben.

In der fleischverarbeitenden Industrie wird die Schlauchhülle mit Hilfe eines Füllautomaten, wie er z.b. in DE-A-2 721 392 erwähnt wird, gefüllt. Die geraffte Ware wird auf einem Füllrohr aufgezogen. Das eine Ende der Schlauchhülle wird durch eine Bremseinrichtung und durch eine Vorrichtung für einen Clippautomaten gezogen und mit Hilfe eines Clips verschlossen. Das Füllgut wird nun durch das Füllrohr gedrückt und zieht den mit dem Clip verschlossenen Darm durch die Bremse, so dass der Schlauch durch die Bremswirkung sein Füllkaliber erreicht. Nachdem das eingestellte Volumen für die Brätmasse erreicht ist, schließt der Clippautomat den schon einseitig verschlossenen und gefüllten Schlauch mit 2. Clips. Gleichzeitig erhält der nächste Schlauchabschnitt seinen Anfangsclip.

Zur Zeit sind alle bekannten Kupplungen beim Füllprozess mit Nachteilen verbunden. Die Kupplungen reißen in vielen Fällen in der Darmbremse entweder infolge von Dickenunterschieden des Darms oder aufgrund von unterschiedlichen Reibungskoeffizienten vor und nach der Kupplungsstelle. Außerdem führen die unterschiedlichen Reibungskoeffizienten vor und nach der Kupplungsstelle zu ungewollten Kaliberschwankungen. Um der Unsicherheit des Reißens und damit einen relativ langen Produktionstörung zu umgehen, ist es in der fleischverarbeitenden Industrie üblich, die Füllmaschine kurz vor bei Erreichen der Kupplungsstelle an der Bremse zu stoppen, die Darmkupplung herauszuschneiden und den Füllprozess wieder neu zu starten.

In EP-A-0 824 857 wird ein Verfahren zum Herstellen von Kupplungen beschrieben, dass mit Hilfe eines Streifens, der aus dem gleichem Material wie die zu verklebenden Schlauchenden besteht, die beiden Enden der schlauchförmigen Hülle mit Hilfe eines Cyanarylatklebers verklebt, beschrieben. Der Kleber wird in Tropfenform in Längs- und Querstreifen auf diesem Streifen aufgebracht, bevor er mit den beiden Darmenden verklebt wird. Die Verklebung ist dann so aufgebaut, dass dieser Streifen übersteht und somit nicht raffflähig ist.

In DE-A-2 903 116 wird eine Kupplung beschrieben, die dadurch gekennzeichnet ist, dass auf beiden Schlauchendenstücke eine Überlappungskupplung aufgeklebt oder aufgesiegelt wird.

Beide Verfahren besitzen folgende Nachteile:
1. Die Kupplungsstelle besitzt in seinem Überlappungsbereich eine größere Stärke, so dass das Druck-Klischee beim Durchlauf der Kupplungsstelle beim Drucken in der Weise deformiert wird, dass hier ein Fehldruck entstehen kann. Außerdem ergibt eine solche Kupplungsstelle bei der Bedruckung von Vorder- und Rückseite, wie es üblich ist, durch seine Dicke eine Fehlstelle (Schattenstelle), die vom Kunden nicht akzeptiert wird. Die Klischees für die Vorderseite und die Rückseite befinden sich nebeneinander auf nur einem Klischeezylinder. Die Vorder- und die Rückseite werden um die in der Druckmaschine befindliche Darmlänge versetzt in einem Arbeitsgang auf einer Zentralzylindermaschine bedruckt. Eine konventionelle Kupplungstelle auf der ersten zu bedruckenden Bahn (Vorderseite) führt neben einer Deformierung des Klischees auch unweigerlich zu einer kurzzeitigen Abhebung des Klischeezylinders vom Zentralzylinders, so dass es zu einem Fehldruck bzw. zu einer Schattenstelle auf der zweiten Bahn (Rückseite) kommt. Dieser Vorgang tritt dann ein weiteres Mal in Erscheinung, wenn sich die Klebestelle beim 2. Durchgang zur Bedruckung der Rückseite auf der zweiten Bahn befindet und damit eine Schattenstelle auf der ersten Bahn erzeigt.
2. Die Kupplungsstelle führt beim Raffvorgang zu Störungen, weil sie infolge Ihrer Dicke und wegen der Breite der Überlappungstelle nicht von den Raff lamellen über das Raffrohr gezogen werden können.
   Der Darm wird beim Raffprozess in der Regel im flachgelegtem Zustand durch die Quetschwalze kraftschlüssig über den Lineartänzer von der Rolle gezogen und im aufgeblasenem Zustand über das Raffrohr von den Fördereinrichtungen geführt. Diese Fördereinrichtungen bestehen aus konkaven angetriebenen Elementen, die nur mit geringer Kraft an den aufgeblasenen Darm anliegen und somit den Darm für den Einlass in den Raffkopf zentrieren. Durch die geringe Anliegekraft der Förderräder an dem aufgeblasenem Darm können nur kleine Vorschubkräfte auf den Darm übertragen werden. Auch von den Rafflamellen kann der Darm nur sehr begrenzt gezogen und auf dem Raffrohr gerafft bzw. zusammengeschoben werden. Wenn die Überlappungslänge der Kupplung den Bereich der mechanischen Abstände der Rafflamellen erreicht bzw. überschreitet, kann kein Vorschub von den Rafflamellen auf dem Darm übertragen werden, so dass der Darm vor dem Raffkopf nicht gerafft wird und es so zu einem Stau des Darms kommt, da die Quetschwalze den Darm weiter transportiert. In diesem Fall muss die Raffmaschine gestoppt werden und es entsteht Darmabfall
   Um den plötzlichen Abbrechen beim Raffprozess zu umgehen und die Menge an Abfall zu reduzieren, wird der Raffvorgang nach Durchlauf der Klebestelle durch die Quetschwalze von Hand durch Abschalten der Maschine gestoppt und die Klebestelle wird von Hand durch den Rankopf auf das Raffrohr geschoben. Nach diesem Vorgang wird die Maschine wieder eingeschaltet.
   Der Darm muss also spezielle Kupplungen besitzen, damit der Darm störungsfrei den Raffprozess durchlaufen kann.
3. Die Kupplungsstelle führt am Füllautomaten zu Abrissen.
   Beim Füllprozess wird der Darm mit den Kupplungstellen durch eine Bremse aus z.B. Vulkulan geführt, die den Darm in Umfangsrichtung abquetscht und dadurch eine Bremswirkung in Längsrichtung ausübt. Diese eingestellte Bremswirkung führt dazu, dass der Darm dem Brät beim Füllen in Längsrichtung eine gewisse Kraft entgegenhält, die sicherstellt, dass der Darm im bestimmten Maße gedehnt wird und so dass gewünschte Kaliber erreicht wird.
   Infolge des diskontinuierlichen Betriebes des Füllautomaten (Füllen und Clippen) wird die Darmbahn beim Durchlaufen durch die Maschine in hohem Maße beschleunigt und wieder abgebremst. In der fleichverarbeitenden Industrie sind Verarbeitungsgeschwindigkeiten des Darmes von 120 Würsten (Takten) pro Minute keine Seltenheit. Infolge der hohen Taktzeiten des Füllautomaten werden beim Durchlaufen der Klebestelle durch die Darmbremse kurzzeitig die Bahnspannung in Längsrichtung des Darmes soweit erhöht, dass diese Werte jenseits der Reißgrenze annimmt, so dass der Darm abreißt.
   Um die Gefahr des Reißens zu umgehen, wird daher der Füllvorgang kurz vor Erreichen der Klebestelle vor der Darmbremse gestoppt. Die Klebestelle wird von Hand durch die geöffnete Bremse gezogen und mit einem zusätzlichen Clip versehen. Danach wird die Automatik wieder eingeschaltet. Jede Unterbrechung des Füllprozesses führt aber dazu, dass die ersten Würste nach der Unterbrechung nicht das gewünschte Kaliber erreichen, so dass mit dieser Verfahrensweise nicht marktgerechte Würste erzeugt werden und damit Abfall entsteht.

Es bestand daher die Aufgabe, ein Verfahren zur Herstellung füllmaschinengängiger Kupplungen für künstliche Wursthüllen für die im Markt befindlichen Darmsorten bereitzustellen.

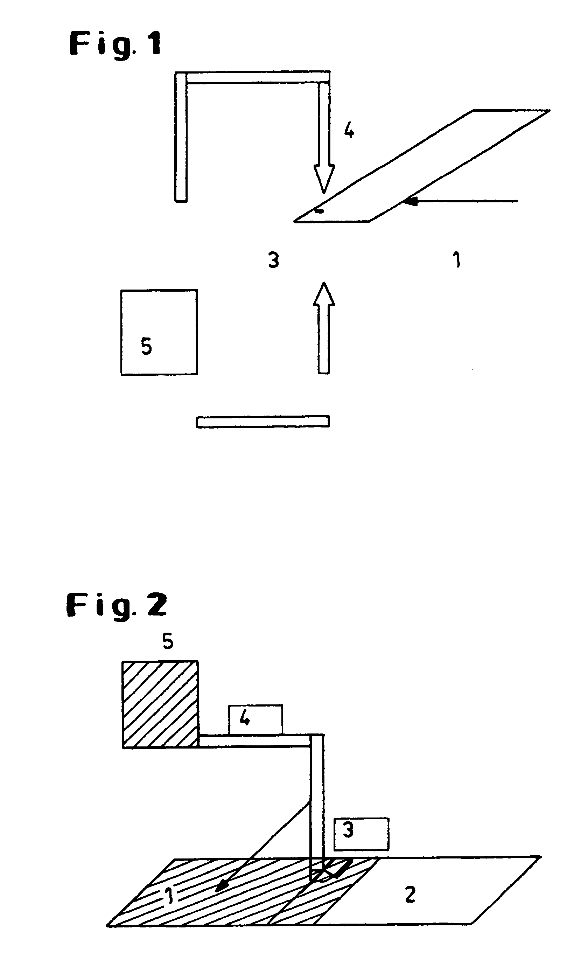

Gelöst wurde diese Aufgabe durch die Bereitstellung eines Verfahrens zur Herstellung von füllmaschinengängigen Kupplungen für künstliche Wusthüllen, bei dem man die Wusthüllen ineinander schiebt und zwischen die Wursthüllen mit einer automatischen Dosiereinrichtung Cyanacrylsäurealkylester in einer Auftragsmenge von 0,01 bis 0,5g/mm² parallel zu den Schnittkanten der ineinander geschobenen Wursthüllen aufträgt und trocknen lässt. Die erfindungsgemäße Vorgehensweise ist in Fig. 1 und 2 schematisch dargestellt. Als Cyanacrylsäurealkylester kann Cyanacrylsäuremethyl-, Cyanacrylsäureethyl- oder Cyanacrylsäurebutylester, bevorzugt Cyanacrylsäureethylester eingesetzt werden.

Im erfindungsgemäßen Verfahren können künstliche Wursthüllen aus Cellulosefasermaterial, die wiederum innen oder außenlackiert sein können, oder aus ein- oder mehrschichtigen biaxial gereckten schrumpffähige polyamidbasierende Materialien bestehen, eingesetzt werden.

Überraschenderweise führen die erfindungsgemäß hergestellten Kupplungen, in den anwendungstechnischen Versuchen zu hervorragenden Verarbeitungsbedingungen beim Drucken, Raffen und insbesondere beim Füllen. Außerdem sind die Kupplungen wegen der geringen Überlappungslänge der Schlauchhülle im gefüllten Zustand kaum noch zu sehen oder als Oberfächenmarkierung zu ertasten. Die Kaliberkonstanz der gefüllten Wurst vor und nach der Kupplung wird durch diese neue Kupplung wegen Durchfahrens der Raupe deutlich erhöht und das Füllverhalten am Füllautomaten kann störungsfrei durchgeführt werden.

Die Kupplung wird vorzugsweise in der Weise durchgeführt, dass der Sekundenklebstoff (z.B. Handelsname: UHU sekundenkleber blitzschnell; Hersteller: UHU GmbH Bühl) mit einer ganz bestimmten Auftragsmenge von 0,01 bis 0,5 g/ mm² und vorzugsweise in einer Bahn mit einer Breite von 0,5 bis 5 mm auf beiden Seiten des flachgelegten Darms mit einer Dosiernadel aufgetragen wird, wie in Figur 1 und 2 dargestellt.

Für die geforderte genaue Auftragsmenge realisieren zu können, wird der Dosiervorgang von einem automatischen Dosiersystem (z.B. von Maka Industrie-Service GmbH mit einem Gerät vom Typ Modell PFC 8300 GCD) durchgeführt. Der Kleber auf Basis Cyanarcrylsäureethylester wird bei einem Druck von 0,2 bis 5 bar insbesondere von 1,0 bis 1,3 bar durch eine Spezial-Dosiernadel mit Tefloneinsatz (TLC), die eine Durchlassöffnung von 0,25 mm besitzt, aufgetragen. Bewährt hat sich hierbei das Vakuumrückhaltesystem an dem Dosiersystem, so dass nach Abschalten des Druckes kein weiterer Kleber aus der Dosiernadel heraustritt.

Bevorzugt wird das flachgelegte Darmende (1) quer zur Laufrichtung bei einer vorgegebenen Geschwindigkeit senkrecht durch zwei waagerecht zueinander angeordneten Dosiernadeln durchgeschoben wird und dabei die richtige Auftragsmenge an Klebermasse (3) aufgetragen (Figur 1). Nach dem Auftragen der Klebemasse wird dieses Darmende sofort in dem zu verbindendem Darmende (2) geschoben, so dass eine kraftschlüssige Verbindung entsteht.

Durch die exakte Ausbringung der Klebstoffmenge und durch die Führung der Nadel an der Schnittkante eines Darmendes entlang stellt dieses erfindungsgemäße Verfahren sicher, dass der Klebstoff in der entsprechenden Überlappungszone bleibt und nicht die inneren Darmbahnen oder die äußeren Darmbahnen im Wickelkontakt miteinander verklebt.

### Beispiele

Bei folgenden Darmsorten Walsroder F plus Darm 55®, Walsroder FR 43® und Walsroder K plus 75® wurden Kupplungen gemäß Figur 1 und 2 wie folgt hergestellt:

Die beiden Darmenden (1) und (2) wurden in einer bestimmten Breite von 1,2 cm ineinander geschoben und flach auf einer Unterlage gelegt. Eine speziell abgewinkelte Füllnadel (Winkelgrad 90°) mit einem Abstand von exakt 4 mm für den unteren Schenkel wurde unter den übereinander gelegten Darm gelegt und nach Auslösen des Pumpvorgangs (5) wurde die Füllnadel (4) an der Schnittkante vorbeigeführt, so dass immer der Abstand zwischen dem Klebstoffauftrag mit Cyanacrylsäureethylester als Kleber und den Nahtkanten eingehalten wurde. Es wurde darauf geachtet, dass der Klebstoffauftrag an der Seite beginnt und dann ohne Verzögerung über die Darmbreite geführt wurde. Nachdem dann die obere Seite verklebt war, wurde der Darm gewendet und das gleiche Verfahren für die Unterseite angewendet.

Für die nachfolgenden Prozesse wie Drucken, Raffen und Füllen wurden die nachfolgenden Verarbeitungskriterien eingeführt: Zum Vergleich wurden noch konventionelle Kupplungen des Standes der Technik, wie in der EP-A-824 857 beschrieben, hergestellt.
1. Erkennbare Schattenstellen beim Bedrucken von Vorder- und Rückseite in einem Arbeitsgang
   Die Klischees für die Vorderseite und die Rückseite befinden auf nur einem Klischeezylinder, da die Vorder- und die Rückseite in einem Arbeitsgang auf einer Zentralzylindermaschine bedruckt werden. Eine konventionelle Kupplungstelle auf der ersten zu bedruckenden Bahn (Vorderseite) führt neben einer Deformierung des Klischees auch unweigerlich zu einer kurzzeitigen Abhebung des Klischeezylinders vom Zentralzylinders, so dass es zu einem Fehldruck bzw. zu einer Schattenstelle auf der zweiten Bahn (Rückseite) kommt. Dieser Vorgang tritt dann ein weiteres Mal in Erscheinung, wenn sich die Klebestelle beim 2. Durchgang zur Bedruckung der Rückseite auf der zweiten Bahn befindet und damit eine Schattenstelle auf der ersten Bahn erzeugt.
2. Häufigkeit der Störungen beim Raffen von 100 durchlaufenden Kupplungstellen
   Wenn die Überlappungslänge der konventionell hergestellten Kupplung den Bereich der Abstände der Rafflamellen erreicht oder die Dicke der Kupplungsstelle zu stark ist, kann kein Vorschub von den Rafflamellen auf dem Darm übertragen werden, so dass sich der Darm vor dem Raffkopf staut und es zu einer Störung kommt.
3. Anzahl Störungen beim Füllen von 100 durchlaufenden Kupplungstellen
   Beim Durchlaufen der konventionellen Klebestellen durch die Darmbremse des Füllautomaten wird kurzzeitig die Bahnspannung des Darms in Längsrichtung soweit erhöht, so dass der Darm abreißt und es zu einer Störung kommt.
4. Zeitbedarf für den Füllprozess von 10 Raffraupen a 20 m Darmlänge mit je einer Kupplungsstelle in Minuten Hier wird die Zeit gemessen, die für das Füllen von vollständig konditionierten Därmen mit konventionellen und erfindungsgemäßen hergestellten Kupplungen mit einer industriegemäßen Füllmaschine (Hersteller: Fa. Polyclip, Typ FCA 34 461) benötigt wird.

| **Tabelle Vergleich** | | | | | | |
|---|---|---|---|---|---|---|
| | Walsroder F plus 55 | Walsroder F plus 55 | Walsroder FR | Walsroder FR | Walsroder K plus | Walsroder K plus |
| Verfahren für Kupplungsstelle | Vergleich | erfindungsgemäß | Vergleich | erfindungsgemäß | Vergleich | erfindungsgemäß |

| **Druckprozess** | | | | | | |
|---|---|---|---|---|---|---|
| Erkennbare Schattenstellen | alle gut erkennbar | nur mit geübtem Auge erkennbar | alle gut erkennbar | nur mit geübtem Auge erkennbar | alle gut erkennbar | nur mit geübtem Auge erkennbar |

| **Raffprozess** | | | | | | |
|---|---|---|---|---|---|---|
| Anzahl Störungen beim Durchlaufen von 100 Klebstellen | 50 | 5 | 40 | 2 | 20 | 7 |

| **Füllprozess** | | | | | | |
|---|---|---|---|---|---|---|
| Anzahl Störungen pro 100 Klebstellen | * | 2 | * | 2 | * | 10 |
| Zeitbedarf Für 10 RaffRaupen a 20 m Darmlänge mit je einer Kupplungsstelle (Minuten) | 30 | 17 | 24 | 19 | 20 | 12 |

| | | | | | | |
|---|---|---|---|---|---|---|
| * Konventionell geklebte Kupplungen führen beim Füllen immer zu Störungen. | | | | | | |

## Patentansprüche

1. Verfahren zur Herstellung füllmaschinengängiger Kupplungen für künstliche Wursthüllen, wobei man die Wursthüllen (4) ineinander schiebt und zwischen die Wursthüllen (4) den Klebstoff Cyanacrylsäurealkylester parallel zu den Schnittkanten der ineinander geschobenen Wursthüllen (4) einbringt und trocknen lässt, **dadurch gekennzeichnet, dass** man den Klebstoff in einer Auftragsmenge von 0,01 bis 0,5 g/mm² mit einer automatischen Dosiereinrichtung (3-5) aufträgt.

2. Verfahren nach Anspruch 1, **dadurch gekennzeichnet, dass** man den Klebstoff in einer Bahn mit einer Breite von 0,5 bis 5 mm aufträgt.

3. Verfahren nach einem der vorherigen Ansprüche, **dadurch gekennzeichnet, dass** die Wursthülle aus Cellulosefaserdarm mit oder ohne Beschichtung oder Polyamid besteht.

4. Verfahren nach einem der vorherigen Ansprüche, **dadurch gekennzeichnet, dass** ein Cyanacrylsäuremethyl-,ethyl oder -butylester eingesetzt wird.

## Claims

1. Method for producing couplings for synthetic sausage casings adapted for filling machines, the sausage casings (1) and (2) being pushed into each other and the adhesive cyanoacrylic acid alkyl ester being introduced between the sausage casings (1) and (2) parallel to the cut edges of the sausage casings (1) and (2) that have been pushed into each other, and allowed to dry, **characterised in that** the adhesive is applied using an automatic metering device (3-5) in an application quantity of 0.01 to 0.5 g/mm².

2. Method according to claim 1, **characterised in that** the adhesive is applied in a track 0.5 to 5 mm wide.

3. Method according to any one of the preceding claims, **characterised in that** the sausage casing consists of cellulose fibre intestine with or without coating or polyamide.

4. Method according to any one of the preceding claims, **characterised in that** a cyanoacrylic acid methyl ester, cyanoacrylic acid alkyl ester or cyanoacrylic acid butyl ester is used.

## Revendications

1. Procédé de préparation de couplages pour enveloppes synthétiques de saucisses, adaptés aux machines de remplissage, dans lequel on glisse les enveloppes de saucisses (1) et (2) l'une dans l'autre et on introduit entre les enveloppes de saucisses (1) et (2) la colle alkylester de l'acide cyanacrylique parallèlement aux bords de coupe des enveloppes de saucisses (1) et (2) glissées l'une dans l'autre et on la laisse sécher, **caractérisé en ce que** l'on applique la colle en une quantité de dépôt de 0,01 à 0,5 g/mm² avec un dispositif de dosage automatique (3-5).

2. Procédé selon la revendication 1, **caractérisé en ce que** l'on applique la colle en une bande d'une largeur de 0,5 à 5 mm.

3. Procédé selon l'une quelconque des revendications précédentes, **caractérisé en ce que** l'enveloppe de saucisse se compose d'un boyau en fibres de cellulose avec ou sans revêtement ou de polyamide.

4. Procédé selon l'une quelconque des revendications précédentes, **caractérisé en ce que** l'on utilise un méthylester, un éthylester ou un butylester de l'acide cyanacrylique.
